(19) Europäisches Patentamt
European Patent Office
Office européen des brevets

(11) Numéro de publication: **0 180 527**
**A1**

(12)
# DEMANDE DE BREVET EUROPEEN

(21) Numéro de dépôt: **85420179.5**

(22) Date de dépôt: **10.10.85**

(51) Int. Cl.⁴: **C 08 G 77/08**, C 08 L 83/04

(30) Priorité: **15.10.84 FR 8415744**

(43) Date de publication de la demande: **07.05.86**
**Bulletin 86/19**

(84) Etats contractants désignés: **AT BE CH DE FR GB IT LI LU NL SE**

(71) Demandeur: **RHONE-POULENC SPECIALITES CHIMIQUES, "Les Miroirs" 18, Avenue d'Alsace, F-92400 Courbevoie (FR)**

(72) Inventeur: **Lebrun, Jean-Jacques, 24, rue Pierre Brunier, F-69300 Caluire (FR)**
Inventeur: **Soula, Gérard, 33, rue Nungesser, F-69330 Meyzieu (FR)**

(74) Mandataire: **Seugnet, Jean Louis et al, RHONE-POULENC RECHERCHES Service Brevets Centre de Recherches de Saint-Fons B.P. 62, F-69192 Saint-Fons Cedex (FR)**

(54) **Procédé de polycondensation des polysiloxanes comportant des groupements hydrosiloxyles par métal alcalin ou alcalino-terreux en présence de tris(oxaalkylamine).**

(57) Procédé de polycondensation des organopolysiloxanes comportant des groupements hydroxysiloxylés, caractérisé en ce qu'on utilise comme catalyseur une quantité catalytiquement efficace d'un système catalytique comprenant (a) au moins un métal alcalin ou alcalino-terreux M sous une forme de poudre métallique finement divisée ou sous une forme ionique et (b) au moins un agent complexant ledit métal M de formule:

$$N\left[CHR_1-CHR_2-O\left(CHR_3-CHR_4-O\right)_n R_5\right]_3 \quad (I)$$

Utilisation des organopolysiloxanes préparés selon le procédé de l'invention comme constituants de compositions organopolysiloxaniques durcissant en élastomères.

EP 0 180 527 A1

# PROCEDE DE POLYCONDENSATION DES POLYSILOXANES COMPORTANT DES GROUPEMENTS HYDROSILOXYLES PAR METAL ALCALIN OU ALCALINO-TERREUX EN PRESENCE DE TRIS(OXAALKYLAMINE)

La présente invention concerne un procédé de polycondensation de polysiloxanes à groupements hydroxysiloxyle en présence de tris-(oxaalkylamine).

Il est bien connu que l'on peut polycondenser les silanols, les silanediols, les polysiloxanediols en présence de composés variés qui accélèrent la polycondensation en jouant le rôle d'agent de déshydratation ou de catalyseur (cf. par exemple le traité de Walter NOLL : Chemistry and Technology of Silicones ; édition 1968 p. 211 à 218).

Parmi les agents de déshydratation, on peut citer d'une part, les composés acides tels que les acides sulfurique et phosphorique, les chlorures d'acides et d'autre part, des composés non acides tels que les isocyanates, les esters boriques ... Tous ces composés doivent être utilisés en proportion stoechiométrique.

Parmi les catalyseurs, on peut citer les acides halogénés, les catalyseurs basiques tels que les hydroxydes alcalins, et les amines telles que la triéthylamine. Enfin, on peut également activer la réaction de polycondensation en utilisant des composés organométalliques de métaux tels que le plomb, l'étain, le zirconium, l'aluminium, le calcium, le sodium, le potassium ...

Ces divers catalyseurs sont en outre réputés favoriser également la réaction d'équilibrage des liaisons siloxaniques par ouverture de ces dernières avec polymérisation ultérieure des liaisons ainsi libérées et de ce fait formation de composés cycliques volatils (Journal of Polymer Science 59 259-269 (1962). Il apparaît alors obligatoire d'effectuer après la polycondensation un traitement de dévolatilisation afin d'obtenir ultérieurement des élastomères organosiliciques ayant des propriétés satisfaisantes.

On a alors préconisé dans le brevet français 2.168.439 d'utiliser en tant que catalyseur de polycondensation, de l'aluminium, celui-ci étant éventuellement recouvert d'une couche d'oxyde. Un

tel catalyseur selon le brevet 2.168.439 ne produit pas de réactions de réarrangement des liaisons siloxaniques, mais la cinétique de polycondensation demeure faible. Il est d'ailleurs à préciser que les catalyseurs basiques ou acides usuels précédemment définis ne permettent également d'obtenir qu'une vitesse de polycondensation relativement lente.

Dans le brevet FR - A - 2.461.730, on décrit un procédé de polycondensation de polysiloxane comportant des groupements hydroxysiloxyles au moyen d'un hydroxyde d'un métal alcalin ou alcalino-terreux et un composé polyhétéromacropolycyclique appelé agent cryptand.

Bien que le procédé décrit dans ce brevet ait permis de faire un progrès important dans ce type de réaction, il conduit généralement en cours de réaction à une formation non négligeable de volatils. Ces volatils sont essentiellement constitués, en plus de la formation inhérente d'eau, par des cyclosiloxanes de type $D_x$ avec x compris entre 3 et 10 inclus. Cette apparition de volatils est d'autant plus importante que l'on conduit la réaction à une température plus élevée et durant une durée plus longue en vue d'obtenir des polysiloxanes de viscosité plus élevée de l'ordre de 300 000 mPa.s. ou plus.

En outre, les cryptands sont des produits très chers et pouvant être toxiques.

Le but de la présente invention est de proposer un nouveau système catalytique de polycondensation des polysiloxanes à groupements terminaux hydroxysiloxylés qui ne présentent pas les inconvénients des systèmes catalytiques connus.

Un but de la présente invention est de proposer un système catalytique peu onéreux, facilement disponible sur le plan industriel, utilisable en quantités réduites, non toxique et qui permette d'aboutir, après un temps relativement court à une température relativement peu élevée à un polysiloxane condensé de masse moléculaire désirée et en particulier élevée et ne renfermant pas ou pratiquement pas de polysiloxanes de masse moléculaire peu élevée.

Ces buts et d'autres sont atteints par la présente invention qui concerne en effet un procédé de polycondensation des organo-polysiloxanes comportant des groupements hydroxysiloxylés en présence d'un catalyseur caractérisé en ce que l'on utilise comme catalyseur une quantité catalytiquement efficace d'un système catalytique comprenant :

(a) au moins un métal alcalin ou alcalino-terreux M sous une forme de poudre métallique finement divisée ou sous une forme ionique, et

(b) au moins un agent complexant ledit métal M de formule :

$$N \left[ CHR_1 - CHR_2 - O \leftarrow CHR_3 - CHR_4 - O \rightarrow_n R_5 \right]_3 \qquad (I)$$

dans laquelle n est un nombre entier compris entre 0 et 10 inclus ; $R_1$, $R_2$, $R_3$ et $R_4$ identiques ou différents sont choisis parmi un atome d'hydrogène et un radical alkyle en $C_1$-$C_4$ et les radicaux $R_5$, identiques ou différents, sont choisis parmi un atome d'hydrogène, un radical alkyle ou cycloalkyle en $C_1$-$C_{12}$, un radical alkylphényle ou phénylalkyle dont la partie alkyle est en $C_1$-$C_{12}$.

De préférence $R_1$, $R_2$, $R_3$ et $R_4$ représentent un atome d'hydrogène ou un radical méthyle et au moins un des radicaux $R_5$ représente l'atome d'hydrogène ou à défaut un radical alkyle en $C_1$-$C_4$.

De façon préférentielle, n est un nombre entier compris entre 0 et 6 inclus, de façon encore plus préférée entre 0 et 3 inclus.

Dans ce qui suit, sauf indication contraire, les pourcentages sont en poids.

Les organo-polysiloxanes peuvent être de nature très variée. Il peut s'agir de polysiloxanes α, ω bis hydroxysiloxylés. Il peut également s'agir de polysiloxanes ramifiés par exemple obtenus par cohydrolyse d'organochlorosilanes mono, di, tri ou tétrachlorés, utilisés en proportions variées et renfermant une proportion relativement importante de diorganodichlorosilane.

Il peut s'agir enfin de polysiloxanes réticulés contenant une proportion relativement importante de motifs siloxaniques tri ou tétrafonctionnels. A titre indicatif les polysiloxanes ramifiés ou réticulés sont obtenus habituellement à partir des organochloro-

silanes suivants : $SiCl_4$, $CH_3$ $SiCl_3$, $C_6H_5SiCl_3$, $(CH_3)_2SiCl_2$, $(CH_3)$ $(CH_2 = CH)SiCl_2$, $CH_3(C_6H_5)SiCl_2$, $(C_6H_5)_2SiCl_2$, $(CH_3)_3SiCl$, $(CH_3)_2$ $(C_6H_5)$ SiCl, $(CH_3)_2$ $(CH_2 = CH)SiCl$. Le rapport entre le nombre total de groupements organiques liés aux atomes de silicium, et le nombre total d'atomes de silicium est habituellement compris entre 0,8 et 2,5. Les divers organopolysiloxanes comportant des groupements hydroxysiloxylés sont par exemple décrits dans le chapitre 6 du traité de Walter Noll précédemment cité.

D'une manière générale les groupements organiques qui sont liés aux divers atomes de silicium des polysiloxanes comportant des groupements hydroxysiloxylés peuvent être de nature très variée. Ces radicaux qui peuvent être identiques ou différents peuvent représenter :

- des radicaux alkyle ou halogénoalkyle ayant de 1 à 5 atomes de carbone et comportant de 1 à 6 atomes de chlore et/ou de fluor.

- des radicaux cycloalkyle et halogénocycloalkyle ayant de 3 à 8 atomes de carbone et contenant de 1 à 4 atomes de chlore et/ou de fluor.

- des radicaux aryle, alkylaryle et halogéno-aryle ayant de 6 à 8 atomes de carbone et contenant de 1 à 4 atomes de chlore et/ou de fluor.

- des radicaux cyanoalkyle ayant de 3 à 4 atomes de carbone.

A titre illustratif, on peut citer parmi les radicaux organiques liés aux atomes de silicium les radicaux suivants :

Les groupes méthyle, éthyle, propyle, isopropyle ; butyle ; isobutyle, n-pentyle ; t-butyle ; chlorométhyle ; dichlorométhyle ; α-chloroéthyle ; α,β-dichloroéthyle ; fluorométhyle ; difluorométhyle ; α, β-difluoroéthyle ; trifluoro-3,3,3 propyle ; trifluoro cyclopropyle ; trifluoro-4,4,4 butyle ; hexafluoro-3,3,4,4,5,5 pentyle ; β-cyanoéthyle ; γ-cyanopropyle ; phényle ; p-chlorophényle ; m-chlorophényle ; dichloro-3,5 phényle ; trichlorophényle ; tétrachlorophényle ; o- p- ou m-tolyle ; α, α, α-trifluorotolyle ; xylyle comme diméthyl-2,3 phényle ; diméthyl-3,4 phényle.

Préférentiellement les radicaux organiques liés aux atomes de silicium sont des radicaux méthyle, phényle, vinyle, ces radicaux pouvant être éventuellement halogénés ou bien encore des radicaux cyanoalkyle.

Le procédé selon l'invention s'applique particulièrement bien à la polycondensation des organopolysiloxanes linéaires α, ω bis hydroxysiloxyle en permettant rapidement l'obtention d'"huile" ou de "gomme" polysiloxanique à OH terminaux et ayant une viscosité élevée (supérieure à 5000 mPa.s à 20° C et pouvant atteindre 500 000 à 2 000 000 mPa.s à 20° C. Les polysiloxanes mis en oeuvre durant la réaction de polycondensation peuvent contenir dans une même molécule un nombre varié d'atomes de silicium ; celui-ci est en général compris entre 3 et 2000.

Selon une variante du procédé de la présente invention, on peut polycondenser simultanément divers polysiloxanes à groupements hydroxysiloxylés, ces polysiloxanes différant entre eux par la nature des radicaux organiques liés aux atomes de silicium, par la valeur du rapport entre le nombre total de groupements organiques liés aux atomes de silicium et le nombre total d'atomes de silicium, par la valeur des masses moléculaires moyennes... On peut selon cette méthode obtenir des copolycondensats blocs constitués par exemple de motifs polydiméthylsiloxaniques et polydiphénylsiloxaniques...

Le métal M alcalin ou alcalino-terreux peut être choisi parmi le lithium, le sodium, le potassium, le rubidium, le césium, le bérylium, le magnésium, le calcium, le strontium et le baryum ; il peut être introduit sous toute forme usitée en polymérisation anionique, notamment, sous forme de siliconates, de silanolates, d'hydroxydes, d'amidures, d'alcoolates. Il est par ailleurs possible d'introduire l'élément métallique directement sous forme de métal à l'état de poudre métallique finement divisée dont la granulométrie peut être par exemple comprise entre 50 et 250 µm. Le métal préféré est le potassium sous sa forme ionique $K^+$ introduit sous forme d'hydroxyde de potassium ou de silanolate de potassium.

Selon un mode de réalisation préférentiel de l'invention, on utilise un agent sequestrant de formule (I) dans laquelle $R_1$, $R_2$, $R_3$ et $R_4$ représentent un atome d'hydrogène ou un radical méthyle, $R_5$ est l'atome d'hydrogène ou un radical méthyle et n est compris entre 0 et 6 inclus.

Parmi ces derniers, on préfère encore plus particulièrement mettre en oeuvre les agents séquestrants suivants :

- la tris(oxa-3 butyl)amine de formule :
  $N\leftarrow(CH_2-CH_2-O-CH_3)_3$
- la tris(dioxa-3,6 heptyl)amine de formule :
  $N\leftarrow(CH_2-CH_2-O-CH_2-CH_2-O-CH_3)_3$
- la tris(trioxa-3,6,9 décyl)amine de formule :
  $N\leftarrow(CH_2-CH_2-O-CH_2-CH_2-O-CH_2-CH_2-O-CH_3)_3$
- la tris(dioxa-3,6 octyl)amine de formule :
  $N\leftarrow(CH_2-CH_2-O-CH_2-CH_2-O-C_2H_5)_3$
- la tris(trioxa-3,6,9 undécyl)amine de formule :
  $N\leftarrow(CH_2-CH_2-O-CH_2-CH_2-O-CH_2-CH_2-O-C_2H_5)_3$
- la tris(dioxa-3,6 nonyl)amine de formule :
  $N\leftarrow(CH_2-CH_2-O-CH_2-CH_2-O-C_3H_7)_3$
- la tris(trioxa-3,6,9 dodécyl)amine de formule :
  $N\leftarrow(CH_2-CH_2-O-CH_2-CH_2-O-CH_2-CH_2-O-C_3H_7)_3$
- la tris(dioxa-3,6 décyl)amine de formule :
  $N\leftarrow(CH_2-CH_2-O-CH_2-CH_2-O-C_4H_9)_3$
- la tris(trioxa-3,6,9 tridécyl)amine de formule :
  $N\leftarrow(CH_2-CH_2-O-CH_2-CH_2-O-CH_2-CH_2-O-C_4H_9)_3$
- la tris (tetra-oxa-3,6,9,12 tridecyl) amine de formule :
  $N-\{CH_2-CH_2-O\leftarrow(CH_2-CH_2-O)_3-CH_3\}_3$
- la tris(hexa-oxa-3,6,9,12,15,18 nonadecyl)amine de formule :
  $N-\{CH_2-CH_2-O-(CH_2-CH_2-O)\!\!\rightarrow_5 CH_3\}_3$
- la tris(dioxa-3,6 méthyl-4 heptyl) amine de formule :
  $N-\{CH_2-CH_2-OCH-(CH_3)-CH_2-O-CH_3\}_3$
- la tris(dioxa-3,6 diméthyl-2,4 heptyl) amine de formule :
  $N-\{CH_2CH-(CH_3)-OCH(CH3)-CH_2-O-CH_3\}_3$
- la triéthanolamine :
  $N\leftarrow(CH_2-CH_2-OH)_3$

- la tris(oxa-3 hydroxy-5 pentyl)amine :

  $N(CH_2-CH_2-O-CH_2-CH_2-OH)_3$

- la tris(dioxa-3,6 hydroxy-8 octyl)amine :

  $N(CH_2-CH_2-O-CH_2-CH_2-OCH_2-OH)$

- la tris(diméthyl-2,4 oxa-3 hydroxy-pentyl)amine :

  $N(CH_2-\underset{CH_3}{CH}-O-\underset{CH_3}{CH}-CH_2-OH)_3$

Selon un mode de mise en oeuvre particulier de l'invention, on utilise comme composé complexant les agents séquestrants, greffés sur des supports polymères organiques réticulés. Ces composés complexants greffés sont notamment ceux décrits dans la demande de brevet européen n° 46706 qui est citée comme référence.

Les agents séquestrants greffés décrits dans la demande de brevet européen n° 46706 sont caractérisés en ce qu'ils sont constitués par un support polymère organique réticulé et par une pluralité de groupes fonctionnels, fixés sur ledit support, de formule générale :

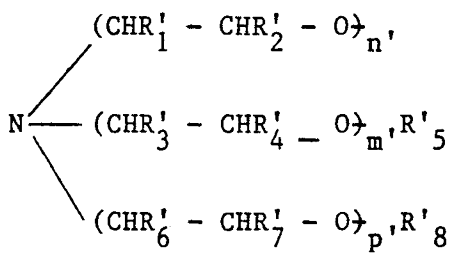

(II)

dans laquelle $R'_1$, $R'_2$, $R'_3$, $R'_4$, $R'_6$ et $R'_7$ identiques ou différents sont choisis parmi un atome d'hydrogène et un radical alkyle ayant de 1 à 4 atomes de carbone, $R'_5$ et $R'_8$ identiques ou différents sont choisis parmi un atome d'hydrogène, un radical alkyle ou cycloalkyle ayant de 1 à 12 atomes de carbone, un radical phényle, un radical alkylphényle ou phénylalkyle dont la partie alkyle est en $C_1-C_{12}$ et dans laquelle n', m', et p' identiques ou différents sont supérieurs ou égaux à 1 et inférieurs ou égaux à 10.

Selon un autre mode de réalisation préféré de l'invention, on utilise un agent séquestrant supporté constitué par un support polymère organique réticulé et par une pluralité de groupes fonctionnels fixés sur ledit support, de formule générale (II) dans laquelle $R'_1$, $R'_2$, $R'_3$, $R'_4$, $R'_6$, et $R'_7$ identiques ou différents,

représentent un atome d'hydrogène ou le radical méthyle et $R'_5$ et $R'_8$ identiques ou différents représentent un atome d'hydrogène ou un radical alkyle en $C_1$-$C_4$. Selon un autre mode de réalisation préférentiel de l'invention, n', m' et p' identiques ou différents sont supérieurs ou égaux à 1 et inférieurs ou égaux à 6.

On peut citer comme exemples de groupes fonctionnels, les groupes de formules suivantes :

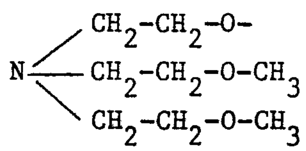

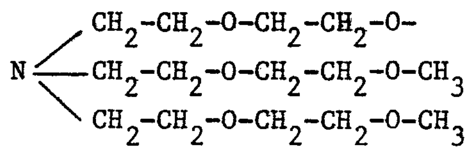

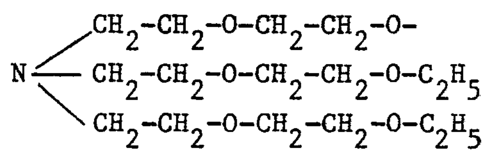

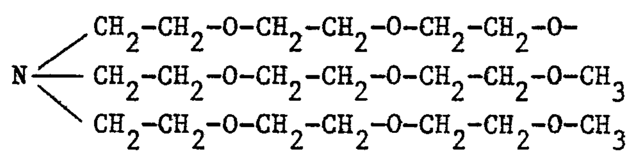

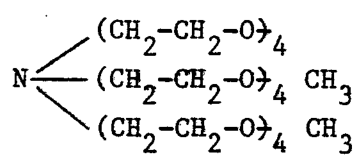

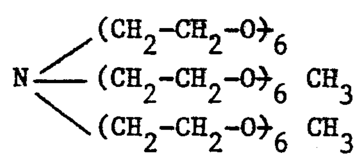

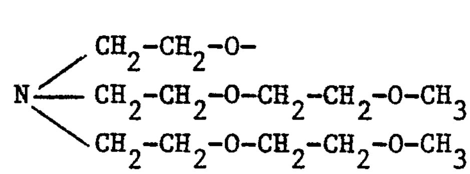

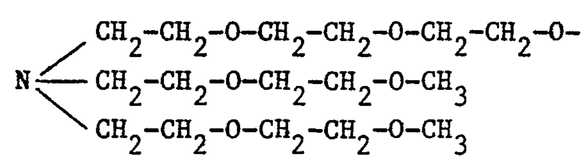

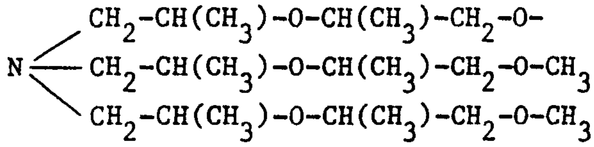

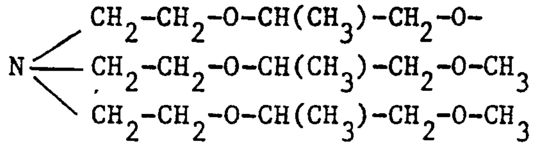

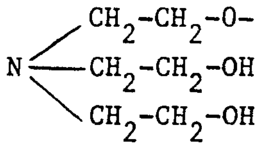

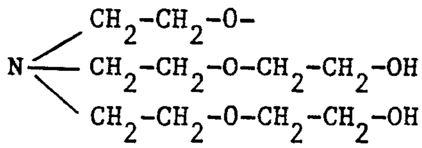

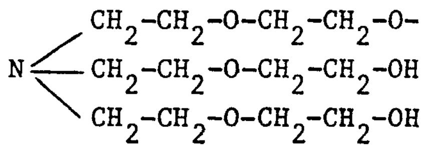

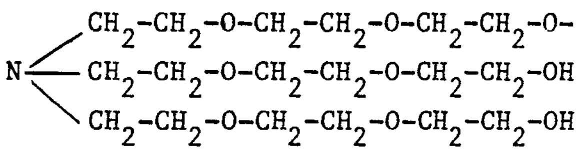

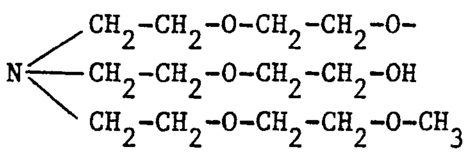

Le support peut dériver de tout polymère organique réticulé comportant des groupements substituables par les groupements fonctionnels de formule (II).

On peut citer comme exemples de polymères organiques adaptés à la présente invention, les polymères dérivés de composés vinylaromatiques tels que le styrène, le méthylstyrène et les copolymères de composés vinylaromatiques et de diènes conjugués en $C_4$-$C_6$ tels que les copolymères du styrène et du butadiène et du styrène et de l'isoprène.

On préfère tout particulièrement utiliser comme polymère organique le polystyrène, l'agent de réticulation étant alors, suivant un mode de réalisation préférentiel, le divinylbenzène. Le taux de réticulation est un facteur important. Il est en effet nécessaire que les groupes fonctionnels de formule (II) greffés sur le polystyrène soient actifs. Pour cela, il faut que les molécules du solvant dans lequel l'agent séquestrant supporté sera mis en oeuvre, dans les applications précisées plus loin, pénètrent à l'intérieur du polymère. Dans ce but, il est nécessaire que le taux de réticulation ne soit pas trop important pour ne pas empêcher la pénétration du solvant et des réactifs. On préfère utiliser un polystyrène dont le taux de réticulation par le divinylbenzène est inférieur à environ 10%. Encore plus préférentiellement, le taux de réticulation est inférieur à 5% environ.

Le groupement substituable est de préférence le chlore ou le brome du radical chloro ou bromo methyl $-CH_2Cl$ ou $-CH_2Br$ fixé sur le noyau benzénique du polystyrène.

On préfère tout particulièrement que le pourcentage de noyaux benzéniques du polystyrène portant un groupement fonctionnel soit supérieur à 5%. Encore plus préférentiellement, ce pourcentage est supérieur à 10%.

On peut représenter les agents séquestrants supportés préférés par la formule suivante :

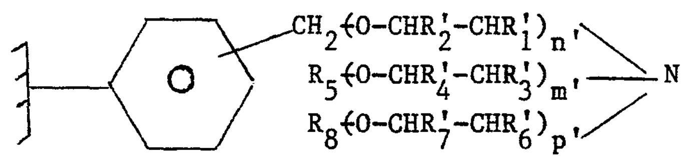

Les agents séquestrants de formule (I) utilisés dans le système catalytique de l'invention sont des produits bien connus qui sont notamment décrits dans les brevets français 1.302.365 et 2.450.120 cités comme référence.

Le système destiné à catalyser la réaction de polycondensation selon l'invention, peut être utilisé en proportions très variées. Il se révèle particulièrement remarquable du fait qu'il peut être mis en oeuvre en très faible quantité. Habituellement, on utilise de 0,1 à 1000 mg et préférentiellement de 1 à 100 mg d'équivalent d'hydroxyde de métal alcalin ou alcalino-terreux par kg de polysiloxane hydroxysiloxylé. L'équivalent d'hydroxyde pour un dérivé alcalin ou alcalino-terreux quelconque est exprimé par le poids de la quantité d'hydroxyde du métal que l'on devrait ajouter et qui correspondrait au même nombre d'atomes grammes de métal alcalin ou alcalino-terreux que celui du dérivé alcalin ou alcalino-terreux utilisé. Par ailleurs, le rapport molaire agent séquestrant sur équivalent hydroxyde de métal alcalin ou alcalino-terreux est habituellement compris entre 0,005 et 10 et préférentiellement entre 0,01 et 1.

La température de la polycondensation peut se situer dans la gamme usuelle de température comprise entre 25°C et 200°C et de préférence entre 80°C et 180°C. Durant la polycondensation, l'eau est éliminée du milieu réactionnel au fur et à mesure de sa formation par tout moyen approprié (distillation azéotropique ; élimination de l'eau sous pression réduite et sous pression de gaz inerte en particulier l'azote...). Dans ces conditions, le système catalytique selon l'invention permet de réduire dans une proportion très importante la durée de la réaction de polycondensation. Par rapport au catalyseur alcalin utilisé seul, le gain peut atteindre et dépasser 75 %. Lorsque la viscosité souhaitée est atteinte, il est recommandé de désactiver le système catalytique par addition d'une très faible quantité d'un composé acide (acide acétique, acide phosphorique, $CO_2$...).

La durée de polymérisation peut être comprise entre plusieurs mn et plusieurs dizaines de mn. Cette durée est d'autant plus longue que la température est plus faible.

Ces polycondensats selon l'invention, comportent des groupements hydroxysiloxylés terminaux. On peut également cependant obtenir des polysiloxanes polycondensés dont les extrémités ne soient pas constitués par des groupements hydroxysiloxylés. Il suffit pour cela après la polycondensation d'ajouter un composé susceptible de réagir avec les groupements hydroxysiloxylés terminaux. Dans ce contexte, on citera le triméthylchlorosilane, le diméthylvinylchlorosilane, le méthyldivinylchlorosilane... On notera que de tels composés modifient les extrémités des chaines des polycondensats et désactivent en même temps le système catalytique.

La réaction de polycondensation des polysiloxanes comportant des groupements hydroxysiloxylés du type linéaire, ramifié ou réticulé peut éventuellement être réalisée en milieu solvant. Dans ce contexte les hydrocarbures aliphatiques ou aromatiques conviennent bien.

Le procédé selon l'invention présente sur le plan industriel un intérêt considérable puisqu'il permet en particulier d'obtenir à partir d'oligomères linéaires polydiméthylsiloxaniques α, ω dihydroxylés de faible masse molaire, pouvant contenir quelques pourcentages de cyclosiloxane du type $D_x$ avec $3 \leq x \leq 10$ et avec une cinétique rapide, des huiles polydiméthylsiloxaniques α, ω dihydroxylées de haute viscosité (supérieure à 50 000 mPa.s. à 20°) et renfermant moins de 1 % de polysiloxanes de masse molaire peu élevée (cyclosiloxane du type $D_x$ ; avec $3 \leq x \leq 10$) ; De telles huiles sont directement utilisables, sans aucun autre traitement ultérieur, pour l'obtention d'élastomères organopolysiloxaniques présentant d'excellentes propriétés mécaniques.

Les exemples qui suivent illustrent l'invention.

EXEMPLE 1 ET EXEMPLE COMPARATIF 1 A

On charge dans un réacteur (ballon tricol) de 250 $cm^3$ agité en verre 150 g d'un polydiméthylsiloxane α, ω bis(hydroxydiméthylsiloxylé) de masse molaire, en nombre de 2900 (viscosité 120 m Pa.s à 25°) contenant 2,7 % de $D_x$, une quantité d'agent complexant déterminée en mg par kg de polysiloxane chargé ($mgKg^{-1}$) :

. Tris(dioxa-3,6 heptyl)amine dénommée $TDA_1$ de formule :

$N(CH_2-CH_2-O-CH_2-CH_2-O-CH_3)_3$

après avoir chauffé le mélange à la température désirée, on ajoute le métal alcalin (potassium ajouté sous forme de silanolate de K en quantité correspondant à 10,6 mg de KOH par kg de polysiloxane chargé (mg $Kg^{-1}$).

La pression du réacteur est alors rapidement amenée à 270 mb de façon à éliminer l'eau au fur et à mesure de sa formation. La réaction est arrêtée à l'instant choisi par désactivation du catalyseur à l'aide d'anhydride carbonique. Après refroidissement l'avancement de la réaction est évalué par la mesure de la viscosité du polycondensat à 25°C.

Le tableau I ci-après précise les conditions opératoires et les résultats obtenus :

| Exemple | Quantité de métal alcalin exprimé en mg KOH $Kg^{-1}$ | Quantité de $TDA_1$ en mg $Kg^{-1}$ | T °C | Durée mn | Viscosité à 25° mPa.s | Taux de volatil % |
|---|---|---|---|---|---|---|
| 1 | 10,6 | 6 | 110 | 20 | 510 000 | 2,3 |
| 1 A | 10,6 | 0 | 110 | 20 | 3 20 | 2,0 |

Le taux de volatil est mesuré de la manière suivante : on introduit environ exactement 2 g d'huile dans une coupe en aluminium que l'on porte à 175° C durant 2 heures sous un vide de 1,3 mb. Après refroidissement la coupe est pesée, ce qui permet d'évaluer les pertes.

L'exemple comparatif 1A démontre l'effet surprenant de l'addition de $TDA_1$ au niveau de la viscosité élevée du polysiloxane obtenu.

EXEMPLE COMPARATIF 1B -

On répète exactement le mode opératoire de l'exemple sauf que l'on remplace les 6 mg $kg^{-1}$ de $TDA_1$ par 2 mg $kg^{-1}$ de cryptand 2,2,2 (diaza-1,10, hexaoxa-4,7,13,16, 21, 24 bicyclo (8,8,8) hexacosane.

La viscosité obtenue est de 700 000 mPa.s.

Le taux volatil est de 6,4 %.

EXEMPLES 2 à 7 ET EXEMPLE COMPARATIF 2A -

On répète exactement le mode opératoire de l'exemple 1 sauf qu'on modifie la quantité et la nature de l'agent complexant ainsi que la durée de la réaction. Les résultats sont rassemblés dans le tableau II ci-après :

THA = tris (oxa-3 hydroxy-5 pentyl) amine

TABLEAU II

| Exemple | Quantité métal alcalin mg KOH $KG^{-1}$ | nature de l'agent complexant | quantité del'agent complexant mg $Kg^{-1}$ | T°C | Durée (mn) | Viscosité mPa.s. | Taux de volatil % |
|---|---|---|---|---|---|---|---|
| 2 A | 10,6 | $TDA_1$ | 0 | 112°C | 38 | 9 200 | 2,9 |
| 2 | 10,6 | $TDA_1$ | 2 | 112°C | 38 | 372 000 | 2,6 |
| 3 | 10,6 | $TDA_1$ | 4 | 112°C | 37 | 1 100 000 | 2,4 |
| 4 | 10,6 | $TDA_1$ | 4 | 112°C | 20 | 230 | 3 |
| 5 | 10,6 | THA | 4 | 112°C | 20 | 66 000 | 1,7 |
| 6 | 10,6 | $TDA_1$ | 4 | 112°C | 30 | 1 700 | 2,5 |
| 7 | 10,6 | THA | 4 | 112°C | 30 | >2 000 000 | 2,6 |

REVENDICATIONS

1. Procédé de polycondensation des organopolysiloxanes comportant des groupements hydroxysiloxylés, caractérisé en ce qu'on utilise comme catalyseur, une quantité catalytiquement efficace d'un système catalytique comprenant (a) au moins un métal alcalin ou alcalino-terreux M sous une forme de poudre métallique finement divisée ou sous une forme ionique et (b) au moins un agent complexant ledit métal M de formule :

$$N \left[ CHR_1 - CHR_2 - O \leftarrow CHR_3 - CHR_4 - O \rightarrow_n R_5 \right]_3 \qquad (I)$$

dans laquelle n est un nombre entier compris entre 0 et 10 inclus; $R_1$, $R_2$, $R_3$ et $R_4$ identiques ou différents sont choisis parmi un atome d'hydrogène et un radical alkyle en $C_1$-$C_4$ et les radicaux $R_5$, identiques ou différents, sont choisis parmi un atome d'hydrogène, un radical alkyle ou cycloalkyle en $C_1$-$C_{12}$, un radical alkylphényle ou phénylalkyle dont la partie alkyle est en $C_1$-$C_{12}$.

2. Procédé selon la revendication 1, caractérisé en ce que dans la formule I, $R_1$, $R_2$, $R_3$ et $R_4$ représentent un atome d'hydrogène ou un radical méthyle et au moins un des radicaux $R_5$ représente l'atome d'hydrogène ou à défaut un radical alkyle en $C_1$-$C_4$.

3. Procédé selon la revendication 1 ou 2 caractérisé en ce que dans la formule (I) n est un nombre entier compris entre 0 et 6.

4. Procédé selon la revendication 3, caractérisé en ce que l'agent complexant de formule (I) est choisi parmi la tris(dioxa-3,6 heptyl)amine et la tris(oxa-3 hydroxy-5 pentyl)amine.

5. Procédé selon la revendication 1, caractérisé en ce que l'agent complexant est greffé sur un support organique réticulé.

6. Procédé selon l'une quelconque des revendications précédentes, caractérisé en ce qu'on met en oeuvre de 0,1 à 1000 mg d'équivalent hydroxyde de métal M alcalin ou alcalino-terreux par Kg de polysiloxane hydroxysiloxylé.

7. Procédé selon l'une quelconque des revendications précédentes, caractérisé en ce que le rapport molaire agent complexant sur équivalent d'hydroxyde de métal alcalin est compris entre 0,005 et 10, de préférence entre 0,01 et 1.

8. Procédé selon l'une quelconque des revendications précédentes caractérisé en ce que M est le potassium.

9. Procédé selon l'une quelconque des revendications précédentes dans lequel les groupements organiques qui sont liés aux atomes de silicium du polysiloxane à groupements hydroxysiloxylé ont pour formule :

- des radicaux alkyles ou halogénoalkyle ayant de 1 à 5 atomes de carbone et comportant de 1 à 6 atomes de chlore et/ou de fluor.

- des radicaux cycloalkyles et halogénocycloalkyles ayant de 3 à 8 atomes de carbone et contenant de 1 à 4 atomes de chlore et/ou de fluor.

- des radicaux aryles, alkylaryles et halogéno-aryles ayant de 6 à 8 atomes de carbone et contenant de 1 à 4 atomes de chlore et/ou de fluor.

- des radicaux cyanoalkyles ayant de 3 à 4 atomes de carbone.

10. Procédé selon la revendication 9 dans lequel les groupements organiques qui sont liés aux atomes de silicium du polysiloxane à groupements hydroxysiloxylés sont des radicaux méthyle, phényle, vinyle, ces radicaux étant éventuellement halogénés ou encore des radicaux cyanoalkyles.

11. Procédé selon la revendication 10 dans lequel le polysiloxane à groupement hydroxysiloxylé est un polydiorganosiloxane linéaire α, ω bis hydroxysiloxylé, pouvant contenir jusqu'à 5 % de composés cycliques $D_x$ dans laquelle x est compris entre 3 et 10 inclus.

12. Procédé selon la revendication 11 dans lequel le polysiloxane à groupement hydroxysiloxylé est un polysiloxane ramifié.

0180527

Office européen des brevets

# RAPPORT DE RECHERCHE EUROPEENNE

Numero de la demande

EP 85 42 0179

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| X | EP-A-0 039 299 (RHONE-POULENC) * Revendications 1-3,5 et 6 * | 1-12 | C 08 G 77/08<br>C 08 L 83/04 |
| D,Y | FR-A-2 450 120 (RHONE-POULENC) * Revendications 1,21-23 et 27 * | 1-12 | |
| Y | DE-A-2 653 498 (WACKER) * Revendication 1; page 5, paragraphe 2; page 15, lignes 22-27 * | 1-12 | |
| Y | EP-A-0 023 187 (RHONE-POULENC) * Revendication 1; page 2, lignes 11-27; page 3, lignes 21-37 * | 1-12 | |
| Y | GB-A- 945 810 (UNION CARBIDE) * Revendication 1; exemple 1, page 5 * | 1 | **DOMAINES TECHNIQUES RECHERCHES (Int. Cl.4)**<br>C 08 G<br>C 08 L |

Le présent rapport de recherche a été établi pour toutes les revendications

| Lieu de la recherche | Date d'achèvement de la recherche | Examinateur |
|---|---|---|
| LA HAYE | 27-01-1986 | DEPIJPER R.D.C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82